(19) Europäisches Patentamt
European Patent Office
Office européen des brevets

(11) **EP 3 882 659 A1**

(12) **EUROPEAN PATENT APPLICATION**

(43) Date of publication:
**22.09.2021 Bulletin 2021/38**

(21) Application number: **21163401.9**

(22) Date of filing: **18.03.2021**

(51) Int Cl.:
**G01S 7/497** (2006.01)      **G01S 17/86** (2020.01)
**G01S 17/931** (2020.01)      **G06T 7/593** (2017.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.03.2020   JP 2020049592**

(71) Applicant: **Ricoh Company, Ltd.**
**Tokyo 143-8555 (JP)**

(72) Inventors:
• **KAWASAKI, TOSHIYUKI**
**Tokyo, 143-8555 (JP)**

• **MURAMOTO, SHUNSUKE**
**Tokyo, 143-8555 (JP)**
• **KOMINAMI, YASUO**
**Tokyo, 143-8555 (JP)**
• **NOGUCHI, SHINJI**
**Tokyo, 143-8555 (JP)**

(74) Representative: **Watkin, Timothy Lawrence Harvey**
**Marks & Clerk LLP**
**Fletcher House**
**The Oxford Science Park**
**Heatley Road**
**Oxford OX4 4GE (GB)**

(54) **METHOD OF CALCULATING DISTANCE-CORRECTION DATA, RANGE-FINDING DEVICE, AND MOBILE OBJECT**

(57)      A method of calculating distance-correction data performed by a range-finding device (20) includes: emitting light to a calibration target at a specified distance from a range-finding device (20) and receiving light reflected from the calibration target that has been irradiated with the emitted light, with an optical-transmission member (102) between the range-finding device (20) and the calibration target, to obtain an actual-measured distance from the range-finding device (20) to the calibration target (S13); and calculating distance-correction data using actual-measurement error data between the specified distance and the actual measured distance to the calibration target, the distance-correction data being used to correct a distance from the range-finding device (20) to a target object measured by emitting light to the target object and receiving light reflected from the target object that has been irradiated with the emitted light, with the optical-transmission member between the range-finding device and the target object. A stereo camera (100) includes cameras (10A) and (10B), a laser rangefinder (20), a holder (30), a housing (40), and a controller (50) wherein cameras (10A, 10B) and controller (50) constitute an image-and-distance-measurement unit. The laser rangefinder (20) is used for the calibration of the image-and-distance-measurement unit. The cover glass (102) is a single flat glass having dimensions sufficient to block openings (101a) and (101b). The laser rangefinder (20) is calibrated with the cover glass (102) before calibration of the stereo camera (100).

FIG. 2

**Description**

BACKGROUND

Technical Field

Embodiments of the present disclosure relate to a method of calculating distance-correction data, a range-finding device, and a mobile object.

Related Art

In recent years, range-finding devices are known that measure a distance to a target object by emitting light to the target object and receiving light reflected from the target object irradiated with the emitted light.

Japanese Patent No. 6427984, for example, discloses a stereo camera device including a range-finding device (e.g., a Time of Flight (TOF) sensor) that measures a distance to a target object using the TOF, which is used to calibrate the stereo camera. To measure the distance to the target object, the TOF employs a time from the timing of emitting near-infrared light to the target object to the timing of receiving light reflected from the target object irradiated with the near-infrared light.

Typical range-finding devices such as TOF sensors might cause large errors in measured distances with any optical-transmission member between the range-finding device and the target object.

SUMMARY

In one aspect of this disclosure, there is described a method of calculating distance-correction data performed by a range-finding device. The method includes: emitting light to a calibration target at a specified distance from a range-finding device and receiving light reflected from the calibration target that has been irradiated with the emitted light, with an optical-transmission member between the range-finding device and the calibration target, to obtain an actual-measured distance from the range-finding device to the calibration target; and calculating distance-correction data using actual-measurement error data between the specified distance and the actual measured distance, the distance-correction data being used to correct a distance from the range-finding device to a target object measured by emitting light to the target object and receiving light reflected from the target object that has been irradiated with the emitted light, with the optical-transmission member between the range-finding device and the target object.

In another aspect of this disclosure, there is disclosed a range-finding device including: an optical-transmission member between a laser rangefinder and a target object; the laser rangefinder configured to: emit light to the target object and receive light reflected from the target object that has been irradiated with the emitted light to measure a distance to the target object; and emit light to a calibration target at a specified distance from the laser rangefinder and receive light reflected from the calibration target that has been irradiated with the emitted light, with the optical-transmission member between the laser rangefinder and the calibration target, to obtain an actual-measured distance from the laser rangefinder to the calibration target; and correcting means for correcting the measured distance to the target object using distance-correction data based on actual-measurement error data between the specified distance and the actual-measured distance.

In even another aspect of this disclosure, there is disclosed a range-finding device including: a laser rangefinder configured to: emit light, whose intensity periodically changes, to a target object and receive light reflected from the target object that has been irradiated with the emitted light to measure a distance to the target object using a difference in phase between the emitted light and the light reflected from the target object; and emit light to a calibration target at at least two different specified distances from the laser rangefinder and receive light reflected from the calibration target that has been irradiated with the emitted light, to obtain actual-measured distances to the calibration target; and correcting means for correcting the measured distance to the target object using distance-correction data based on actual-measurement error data between the specified distances and the actual-measured distances. The specified distances include two distances at an interval of n/2 of a cycle of the emitted light where n is a natural number.

In still another aspect of this disclosure, a mobile object includes the range-finding device.

The embodiments of the present disclosure achieve more accurate distance measurement using a range-finding device, which is not assumed to be used with an optical-transmission member between the target object and the range-finding device, with the presence of such an optical-transmission member between the target object and the range-finding device.

BRIEF DESCRIPTION OF THE SEVERAL VIEWS OF THE DRAWINGS

The aforementioned and other aspects, features, and advantages of the present disclosure would be better understood by reference to the following detailed description when considered in connection with the accompanying drawings, wherein:

FIG. 1 is a perspective view of appearance of a stereo camera according to an embodiment of the present disclosure;
FIG. 2 is an illustration of a configuration of the stereo camera in FIG. 1;
FIG. 3 is an illustration of a range-finding principle and a calibration method of a typical stereo camera;
FIG. 4 is another illustration of a range-finding principle and a calibration method of a typical stereo camera;
FIG. 5 is a ZX plan view for describing the relative position of the measurement origin point between cameras and a laser rangefinder in the stereo camera according to an embodiment;
FIG. 6 is a ZY plan view for describing the relative position of the measurement origin point between the cameras and the laser rangefinder in the stereo camera according to an embodiment;
FIG. 7 is a functional block diagram of the stereo camera according to an embodiment;
FIG. 8 is a flowchart of a calibration method of the stereo camera according to an embodiment;
FIG. 9 is a graph of mean error values for distances to target objects located at a distance of 1 meter (m) between adjacent target objects within a range from 1 m to 10, which are measured by 10 laser rangefinders without any optical-transmission members between the laser rangefinders and the target objects;
FIG. 10 is a graph of mean error values for distances to target objects located at a distance of 1 meter (m) between adjacent target objects within a range from 1 m to 10, which are measured by 10 laser rangefinders with optical-transmission members (i.e., sheets of glass each having a thickness of 1 mm between the laser rangefinders and the target objects;
FIG. 11 is a flowchart of a calibration method of a laser rangefinder according to one modification of an embodiment;
FIG. 12 is a graph of errors in corrected measured distances obtained by correcting distances measured by ten laser rangefinders under the same conditions as in FIG. 10, using initial error-correction data;
FIG. 13 is a graph of errors in corrected measured distances obtained by correcting distances measured by the ten laser rangefinders under the same conditions as in FIG. 12, using error-correction data obtained according to a calibration example 1;
FIG. 14 is a flowchart of a calibration method of the laser rangefinder according to calibration example 2;
FIG. 15 is a graph of errors in corrected measured distances, obtained by correcting distances measured by ten laser rangefinders, using error-correction data obtained according to calibration example 2;
FIG. 16 is a graph of errors in corrected measured distances, obtained by correcting distances measured by ten laser rangefinders, using error-correction data obtained according to calibration example 3; and
FIG. 17 is an illustration of a bulldozer as construction vehicle according to an embodiment.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

A method of calculating distance-correction data, performed by a range-finding device according to an embodiment of the present disclosure, is described according to an embodiment, with reference to the drawings.

The structure and operations of a stereo camera 100 with a range-finding device according to an embodiment of the present disclosure.

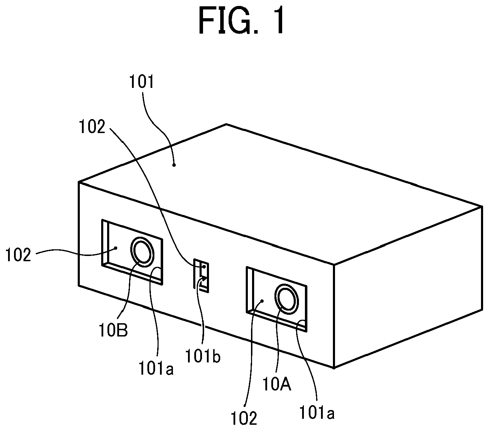

FIG. 1 is a perspective view of appearance of the stereo camera 100 according to an embodiment of the present disclosure.

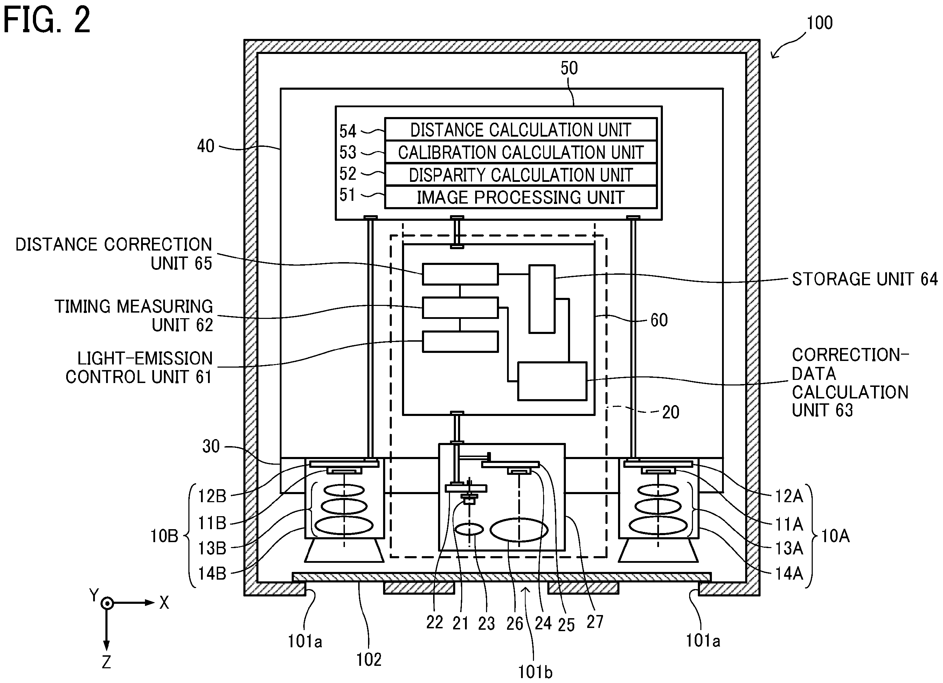

FIG. 2 is an illustration of the configuration of the stereo camera 100 in FIG. 1.

The stereo camera 100 according to an embodiment includes cameras 10A and 10B, a laser rangefinder 20 as a range-finding device, a holder 30, a housing 40, and a controller 50. In the stereo camera 100, the cameras 10A and 10B, and the controller 50 constitute an image-and-distance-measurement unit that processes images (i.e., image data) of the target object captured by the cameras 10A and 10B and performs a distance measurement process to measure a distance to the target object under the control of the controller 50. In some examples, the stereo camera 100 includes three or more cameras to perform the process of measuring the distance to the target object. The laser rangefinder 20 receives light reflected from the target object irradiated with light emitted from laser rangefinder 20 to measure a distance to the target object, which is to be used for the calibration of the image-and-distance-measurement unit.

To maintain or increase robustness against crash, dust-proof against dust and dirt, and water-proof against rain, the stereo camera 100 according to an embodiment is enclosed within an outer case 101 serving as a protector. The outer case 101 has openings 101a for the cameras 10A and 10B to capture images, and an opening 101b for the laser rangefinder 20 to measure a distance. The outer case 101 includes a cover glass 102 as an optical-transmission member used to block the two openings 101a and the opening 101b.

The cover glass 102 is a single flat glass with a dimension sufficient to block the openings 101a and 101b. In some examples, the cover glass 102 includes two or more sheets of flat glass. The cover glass 102 of a single cover glass contributes to an increase in the strength of the outer case and also achieves an accurate alignment of glass portions for blocking the openings 101a and 101b, respectively, without misalignment of the plural sheets of flat glass that respectively block the two openings 101a and the opening 101b, which would be caused by the cover glass 102 including two or more sheets of flat glass.

The stereo camera 100 according to an embodiment is mounted on an object whose distance to the target object changes. The object on which the stereo camera 100 is mounted is a mobile object such as a vehicle, a ship, or a railway, or a stationary object such as a building for factory automation (FA). The target object is, for example, another mobile object, a person, an animal, or a stationary object in the direction of travel of the mobile object mounted with the stereo camera 100. The stereo camera 100 according to an embodiment is particularly suitable to be mounted on the outside of an mobile object because the components of the stereo camera 100 is protected by the outer case 101 and cover glass 102 to maintain or increase the robustness, dust-proof, and water-proof. According to the specifications of the outer case 101 and the cover glass 102, the stereo camera 100 according to an embodiment is available in dusty places such as construction sites and factories and may be mounted on a construction machine such as a bulldozer or a cargo handling vehicle, which are used in such dusty places.

The camera 10A includes an image sensor 11A, an image-sensor board 12A, a camera lens 13A, a camera casing 14A. The camera 10B includes an image sensor 11B, an image-sensor substrate 12B, a camera lens 13B, and a camera casing 14B.

The image sensors 11A and 11B each are, for example, a charge-coupled device (CCD) or a complementary metal oxide semiconductor (CMOS), which uses a photoelectric conversion element. The image sensor 11A captures an image of a target object by receiving light reflected from the target object and passed through the camera lens 13A. The image sensor 11B captures an image of a target object by receiving light reflected from the target object and passed through the camera lens 13B. As illustrated in FIG. 2, the image sensors 11A and 11B are at the ends of the laser rangefinder 20, respectively.

On the image-sensor boards 12A and 12B, the image sensors 11A and 11B are mounted. The image-sensor boards 12A and 12B include control circuits to control the operations of the image sensors 11A and 11B, respectively.

The camera lenses 13A and 13B serve as an image-capturing lens that transmits light reflected from the target object while adjusting the direction of incidence or incident angle of the light passing through the camera lenses 13A and 13B. Then, the image sensors 11A and 11B form images of the target object with the light transmitted through the camera lenses 13A and 13B, respectively.

The camera casings 14A and 14B constitute a part of the housing 40. The camera casing 14A houses the components of the camera 10A including the image-sensor boards 12A and the camera lens 13A, and the camera casing 14B houses the components of the camera 10B including the image-sensor boards 12B and the camera lens 13B.

The controller 50 includes a substrate mounted on the housing 40. The controller 50 includes an image processing unit 51, a disparity calculation unit 52, a calibration calculation unit 53, and a distance calculation unit 54.

The image processing unit 51 generates images in accordance with signals output from the image sensors 11A and 11B. The image processing unit 51 performs image processing including, for example, correcting distortion of the images captured by the cameras 10A and 10B, in accordance with a predetermined parameter for the stereo camera 100.

The disparity calculation unit 52 calculates a disparity do of the target object using the images captured by the cameras 10A and 10B and generated by the image processing unit 51. For such a disparity calculation, known pattern matching is employed, for example. In the process of calculating disparity, two or more locations with different distances between the image-and-distance-measurement unit and the target object are used to calculate a disparity.

The calibration calculation unit 53 obtains, from the laser rangefinder 20, data regarding distance Z between the stereo camera 100 and a calibration target at two or more different locations with different distances to the stereo camera 100, thus obtaining two or more combinations of disparity do and distance Z through calculation. The calibration calculation unit 53 obtains values of Bf and $\Delta d$ by substituting the two or more combinations of disparity do and distance Z into the formula (6) below. The calibration is completed by storing the values of Bf and $\Delta d$ in, for example, a memory.

The distance calculation unit 54 substitutes the disparity do output from the disparity calculation unit 52 and the values of Bf and $\Delta d$ obtained through the calibration, into the formula (6) to obtain distance Z to the target object.

The laser rangefinder 20 includes a TOF sensor that measures a distance to the target object using a time period from the timing of emitting light (e.g., electromagnetic waves) to the target light to the timing of receiving light reflected from the target object irradiated with the emitted light (i.e., the TOF is used). The laser rangefinder 20 includes a light source 21, a light-source substrate 22, a projector lens 23, a light-receiving element 24, a substrate 25 for the light-receiving element 24, a light-receiving lens 26, a laser-rangefinder housing 27, and a laser-rangefinder controller 60.

The light source 21 emits light toward and to the target object. The light source 21 is, for example, a laser diode (LD). The light source 21 according to an embodiment emits near-infrared light having wavelength ranges of 800 nanometers (nm) to 950 nm.

The light-source substrate 22 mounted with the light source 21 drives the operation of the light source 21. The light-source substrate 22 includes a drive circuit that increases voltage supplied from the vehicle up to a specified level, and generates vibration signals to cause the light source 21 to emit light. In response to the received vibration signal, the light source 21 periodically emits short pulsed light with a pulse width of approximately a few nanoseconds to several hundred nanoseconds. The light-source substrate 22 receives an emission-control signal from the laser-rangefinder controller 60 and applies a predetermined modulating current to the light source 21.

The projector lens 23 transmits light emitted from the light source 21 and adjusts the direction of irradiation or irradiation angle of the light passing through the projector lens 23. The projector lens 23 collimates the light emitted from the light source 21 to parallel light (including substantially parallel light). This enables the laser rangefinder 20 to measure a distance to a minute area of a target object to be detected.

Some rays of the light emitted from the light source 21 are reflected from the target object. The light-receiving element 24 receives through the light-receiving lens 26 and converts some rays (i.e., reflected light) reflected from the targe object into electrical signals, transmitting the electrical signals to the laser-rangefinder controller 60. What is reflected from the target object (i.e., reflected light) is a reflected wave of near-infrared light that has been emitted from the light source 21 and reflected from the target object. The light-receiving element 24 is, for example, a silicon PIN (P-Intrinsic-N) photodiode, an avalanche photodiode (APD), or another type of photodiode.

The light-receiving element 24 is mounted on the substrate 25. The substrate 25 includes an amplifier circuit that amplifies received signals. The amplifier circuit of the substrate 25 amplifies electrical signals to be output from the light-receiving element 24 and outputs to the laser-rangefinder controller 60 the amplified electrical signals as signals received by the light-receiving element 24.

The light-receiving lens 26 transmits light reflected from the target object while adjusting the direction of incidence or incident angle of the light.

The laser-rangefinder housing 27 houses some components of the laser rangefinder 20 including the light source 21 and the light-receiving element 24.

The laser-rangefinder controller 60 includes a substrate mounted on the housing 40. The laser-rangefinder controller 60 includes a light-emission controller 61, a time measuring unit 62, a correction-data calculation unit 63, a storage unit 64, and a distance correction unit 65.

The light-emission controller 61 controls light emission of the light source 21. The time measuring unit 62 starts time measurement at the timing when the drive circuit of the light-source substrate 22 generates a signal and ends the time measurement at the timing when the light-receiving element 24 generates a signal converted from the reflected light, thus obtaining a time from the emitting timing to the receiving timing of the signal.

The correction-data calculation unit 63 calculates distance-correction data used to correct a distance measured by the laser rangefinder 20. The storage unit 64 stores different data sets used for the correction-data calculation unit 63 to calculate distance-correction data and the distance-correction data calculated by the correction-data calculation unit 63. Using the distance-correction data stored in the storage unit 64, the distance correction unit 65 corrects a measured distance that has been obtained from the time measured by time measuring unit 62 and outputs the corrected measured distance.

The laser rangefinder 20 includes the laser-rangefinder controller 60 in the housing 40 separate from the laser-rangefinder housing 27. This enables a reduction in the size of the laser-rangefinder housing 27. Such a downsized laser-rangefinder housing 27 of the laser rangefinder 20 can be located between the cameras 10A and 10B of the image-and-distance-measurement unit. The laser-rangefinder controller 60 includes a substrate used in common with the controller 50. In other words, the same substrate is shared by the laser-rangefinder controller 60 and the controller 50. This arrangement achieves a less costly stereo camera 100.

The laser rangefinder 20 calculates a distance to the target object using time difference between the emitting timing of the light source 21 and the receiving timing of the light-receiving element 24.

More specifically, the projector lens 23 slightly diverges light modulated under the control of the light-emission controller 61 and emitted from the light source 21, thus producing a light beam having a small divergence angle. Such a light beam is emitted from the laser rangefinder 20 in a direction (i.e., the Z-axis direction) orthogonal to the face of the holder 30 on which the laser-rangefinder housing 27 is mounted. The target object is irradiated with the light beam emitted from the laser rangefinder 20. The light beam that has struck the target object is then scattered and reflected at a reflection point on the target object in uniform directions, thus turning scattered light. Some rays of the scattered light pass through the same optical path as the light beam emitted from the light source 21 to the targe object, in the backward direction. Only the light component of such rays travels back to the light-receiving element 24 through the light-receiving lens 26 in substantially the same axis as the light source 21. Thus, only the light component of the rays becomes light reflected from the target object. The light reflected from the target object and striking the light-receiving element 24 is detected as a received-light signal by the light-receiving element 24.

The holder 30 is a common member holding at least the image sensors 11A and 11B of the cameras 10A and 10B and at least one of the light source 21 and the light-receiving element 24 of the laser rangefinder 20. The arrangement that supports the cameras 10A and 10B and laser rangefinder 20 using the same holder 30 can more accurately determine a distance from a measurement origin point of each of the laser rangefinder 20 and the cameras 10A and 10B in the direction of emission of the light source 21. The measurement origin point is a reference point to measure a distance from each of the laser rangefinder 20 and the cameras 10A and 10B. The measurement origin point at the cameras 10A and 10B refers, for example, to the imaging planes of the image sensors 11A and 11B. The measurement origin point at the laser rangefinder 20 refers, for example, to a light-receiving surface of the light-receiving element 24.

The laser-rangefinder housing 27 mounted on the holder 30 includes the light-source substrate 22 mounted with the light source 21 and the substrate 25 mounted with the light-receiving element 24. The laser rangefinder 20 is mounted onto the holder 30 to be between the cameras 10A and 10B. This arrangement can reduce the size of the device configuration of the stereo camera 100. Such a position of the laser rangefinder 20 mounted onto the holder 30 is not limited to the position between the cameras 10A and 10B. The holder 30 may hold the image sensors 11A and 11B and the light-receiving element 24 via the camera casings 14A and 14B and the laser-rangefinder housing 27.

Next, the range-finding principle and a calibration method of a typical stereo camera are described.

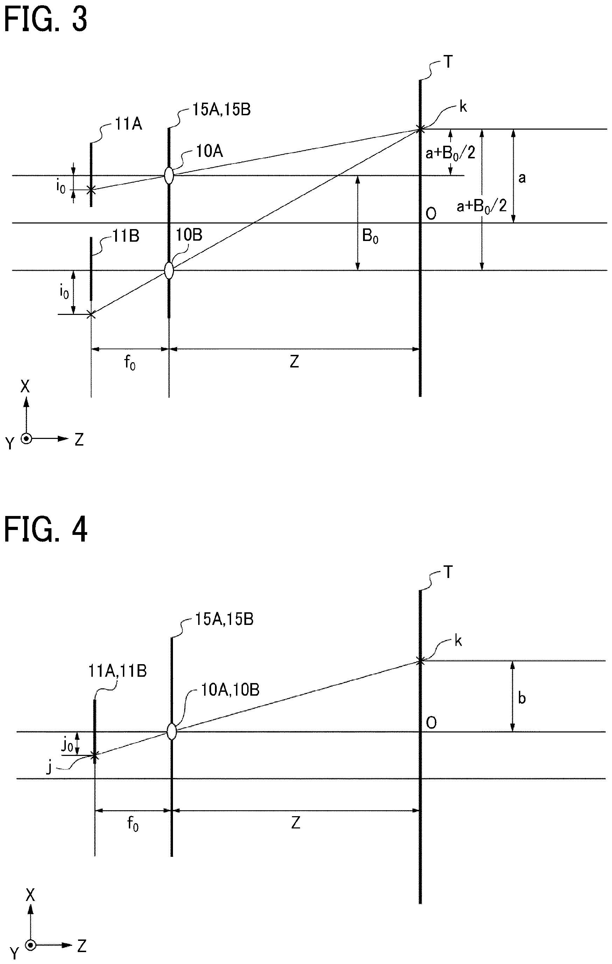

FIGs. 3 and 4 are illustrations of the range-finding principle and the calibration method of a typical stereo camera according to a comparative example.

More specifically, FIGs. 3 and 4 indicate the relation of a characteristic point k on a calibration target T captured by the cameras 10A and 10B, and characteristic points j on the image sensors 11A and 11B of the cameras 10A and 10B. In FIGs. 3 and 4, the horizontal direction along a plane of the calibration target T is the X-axis direction, and the vertical direction with respect to the plane of the calibration target T is the Y-axis direction.

In FIGs. 3 and 4, $B_0$ denotes a distance (i.e., baseline length) between the cameras 10A and 10B, fo denotes the focal length of the cameras 10A and 10B, and Z denotes a distance between the calibration target T and each of the optical centers 15A and 15B (i.e., the position at which the stereo camera 100 is disposed) of the cameras 10A and 10B in the stereo camera 100. For the characteristic point k (a, b, 0) on the calibration target T, an ideal position ($i_0$, $j_0$) of the characteristic point j of the camera 10A is determined by the formula (1) and the formula (2) below:

$$i_0 = \left( a - \frac{B_0}{2} \right) \cdot \frac{f_0}{Z} \qquad \ldots (1)$$

$$j_0 = b \cdot \frac{f_0}{Z} \qquad \ldots (2)$$

An ideal position ($i_{0'}$, $j_{0'}$) of the characteristic point j of the camera 10B is determined by the formula (3) and the formula (4) below:

$$i_0' = \left(a + \frac{B_0}{2}\right) \cdot \frac{f_0}{Z} \qquad \dots (3)$$

$$j_0' = b \cdot \frac{f_0}{Z} \qquad \dots (4)$$

The distance Z is obtained by the formula (5) below, which is obtained from the formula (1) and the formula (3).

$$Z = \frac{B_0 \cdot f_0}{i_0' - i_0} = \frac{B_0 \cdot f_0}{d_0} \qquad \dots (5)$$

As described above, the distance Z between the calibration target T and the position at which the stereo camera 100 is disposed is obtained by substituting the disparity do between the cameras 10A and 10B into the formula (5). For the focal length and the baseline length of the cameras 10A and 10B, however, errors occur between design values and actual measured values. Measured disparity values include errors because of, for example, displacement of the image sensors of the cameras 10A and 10B, from the ideal positions. To achieve higher accurate range finding with the stereo camera 100 in view of such errors, the formula (6) below is preferably used to obtain the distance Z. In the formula (6), B denotes the actual baseline length, f denotes the actual focal length, do denotes a measured disparity, and $\Delta d$ denotes an offset of disparity.

$$Z = \frac{B \cdot f}{d_0 + \Delta d} \qquad \dots (6)$$

To obtain a distance Z using the formula (6), Bf (i.e., a value obtained by multiplying B by f) and $\Delta d$ are to be obtained in advance, and the stereo camera 100 is to be calibrated.

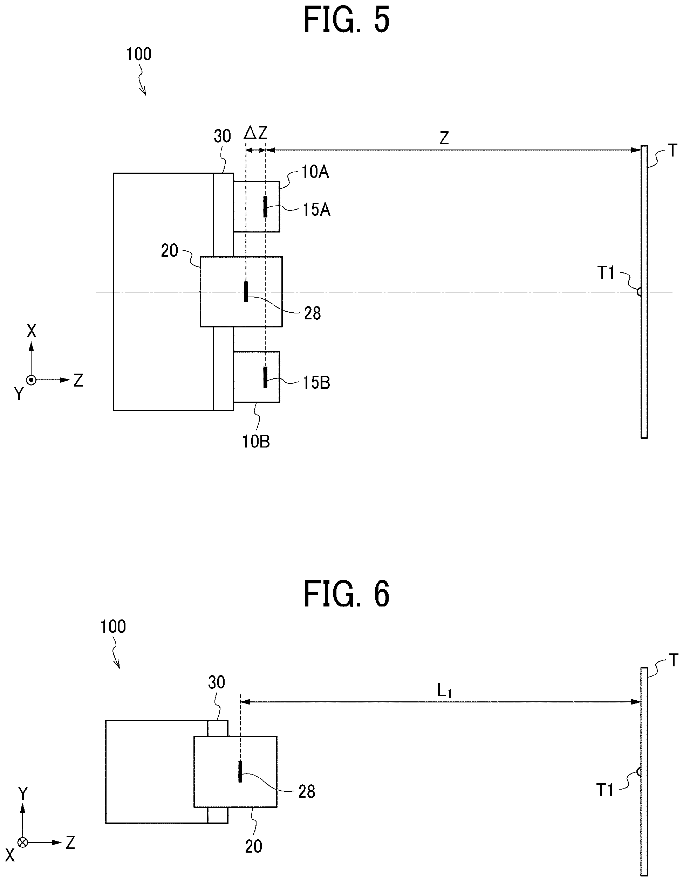

FIG. 5 is a ZX plan view for describing the relative position of the measurement origin point between the cameras 10A and 10B and the laser rangefinder 20 in the stereo camera 100.

FIG. 6 is a ZY plan view for describing the relative position of the measurement origin point between the cameras 10A and 10B and the laser rangefinder 20 in the stereo camera 100.

As illustrated in FIG. 5, a calibration target T is located ahead of the cameras 10A and 10B to measure a disparity do, which is used for calibration of the stereo camera 100. For the calibration target T, two or more combinations of disparity do and distance Z are obtained with different setting positions along the Z-axis direction (i.e., a direction of measurement), and values of Bf and $\Delta d$ are obtained using the formula (6).

In such a calibration method involving measuring a distance to the calibration target T, the distance Z between the stereo camera 100 and the calibration target T is to be accurately measured to calibrate the stereo camera 100 more accurately. To achieve such a more accurate calibration, the stereo camera 100 uses the same holder 30 as the cameras 10A and 10B to support the laser rangefinder 20, and such a laser rangefinder 20 is used to measure the distance Z between the stereo camera 100 and the calibration target T, thus achieving an accurate measurement of the distance Z.

More specifically, the laser rangefinder 20 and the cameras 10A and 10B of the image-and-distance-measurement unit are mounted onto the same holder 30 in the stereo camera 100 as described above. Using the holder 30 in the stereo camera 100, the cameras 10A and 10B and the laser rangefinder 20 are fixed to the holder 30 with the relative position between the cameras 10A and 10B and the laser rangefinder 20 in the Z-axis direction (i.e., the direction of measurement) preliminarily adjusted and fixed. In the example of FIG. 5, the difference $\Delta Z$ is known between the measurement origin points 15A and 15B of the controller 50 and the measurement origin point 28 of the laser rangefinder 20. As illustrated in FIGs. 5 and 6, the stereo camera 100 measures a distance Z (i.e., a difference between a measured

distance $L_1$ and known value $\Delta Z$ ($L_1 - \Delta Z$)) between the image-and-distance-measurement unit and the calibration target T by subtracting the known value $\Delta Z$ from the measured distance $L_1$ measured by the laser rangefinder 20.

In this case, the disparity do is constant irrespective of image-capturing positions on the calibration target T within the image-capturing area of the cameras 10A and 10B because any values other than the baseline length B and the disparity offset $\Delta d$ have been already calibrated. For the calibration of the stereo camera 100, any calibration target T has one characteristic point T1 or more, which can be simultaneously captured by the cameras 10A and 10B. Further, the calibration target T is preferably coincident with the position to be irradiated with a laser emitted from the laser rangefinder 20, thus achieving an accurate measurement of the distance Z between the image-and-distance-measurement unit and the calibration target T.

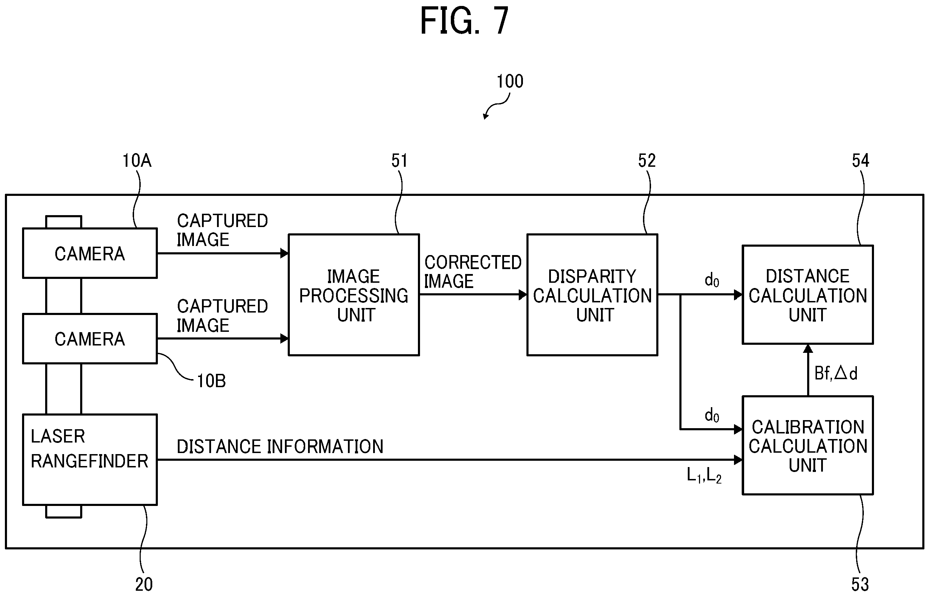

FIG. 7 is a functional block diagram of the stereo camera 100 according to an embodiment.

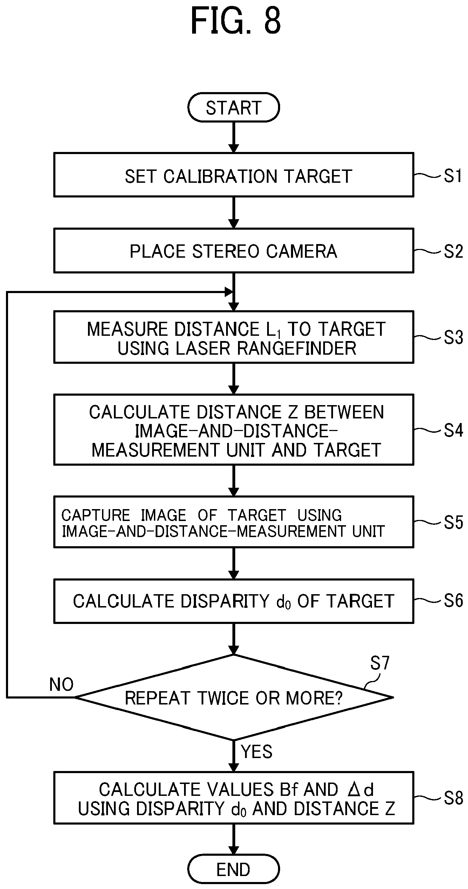

FIG. 8 is a flowchart of the calibration method (i.e., a calibration process) of the stereo camera 100 according to an embodiment.

In this example, calibration of the stereo camera 100 is performed during inspection of products before shipment of the stereo camera 100. In some examples, calibration is performed during use of the stereo camera 100 after the stereo camera 100 is mounted on a mobile object.

In step S1 (S1) of the flowchart of the calibration method in FIG. 8, a calibration target T is set ahead of the stereo camera 100 in the direction of measurement, for calibration of the stereo camera 100. In step S2 (S2), the stereo camera 100 is placed at a predetermined position to irradiate a characteristic point T1 of the calibration target T with a light beam emitted from the laser rangefinder 20.

In the laser rangefinder 20, the light-receiving element 24 receives light reflected from the calibration target T that has been irradiated with the light beam emitted from the light source 21. In the laser rangefinder 20, the timing measuring unit 62 measures a time from the timing of emitting a light beam to the timing of receiving reflected light, and measures a distance $L_1$ between the calibration target T and the measurement origin point 28 of laser rangefinder 20 using the measurement result (step S3 (S3)). In step S4 (S4), the distance calculation unit 54 of the controller 50 calculates a distance Z between the image-and-distance-measurement unit and the calibration target T using known value $\Delta Z$ and a measured distance $L_1$ measured by the laser rangefinder 20.

In step S5 (S5), the cameras 10A and 10B of the image-and-distance-measurement unit capture images of the characteristic point T1 of the calibration target T. The image processing unit 51 processes the captured images of the characteristic point T1 into corrected image data (i.e., corrected images). In step S6 (S6), the disparity calculation unit 52 calculates a disparity do of the calibration target T using the corrected images. Through the steps S3 to S6, the stereo camera 100 obtains the relation of the distance Z and the disparity do, which are used for calibration performed by the controller 50.

In the stereo camera 100, two or more combinations of disparity do and the distance Z are to be used for the calibration calculation unit 53 to determine values of Bf and $\Delta d$ using the relation of the distance Z and the disparity do. To obtain two or more combinations of disparity $d_0$ and the distance Z, whether or not the processes of steps S3 to S6 are repeated twice or more is determined in step S7 (S7).

When the processes of steps S3 to S6 are not repeated twice or more (NO in step S7), the processes of steps S3 to S6 are repeated for two or more different distances Z between the stereo camera 100 and the calibration target T. When the processes of steps S3 to S6 have been repeated twice or more (YES in step S7), the calibration calculation unit 53 calculates values of Bf and $\Delta d$ using the two or more combinations of the distance Z and the disparity do in step S8 (S8). Then, the calibration process ends.

In the present embodiment, the values of Bf and $\Delta d$ calculated by the calibration calculation unit 53 using the measured distance $L_1$ measured by the laser rangefinder 20 are input to the distance calculation unit 54. Thus, the calibration of the stereo camera 100 is completed. The calibration method is not limited to such processes. In some examples, the measured distance $L_1$ measured by the laser rangefinder 20 is input to the image processing unit 51, and the corrected images generated by the image processing unit 51 is corrected according to the measured distance $L_1$. Thus, the calibration of the stereo camera 100 is completed. In some other example, the measured distance $L_1$ measured by the laser rangefinder 20 is input to the disparity calculation unit 52, and a disparity value obtained by the disparity calculation unit 52 is corrected according to the measured distance $L_1$. Thus, the calibration of the stereo camera 100 is completed.

Next, a calibration of the laser rangefinder 20 is described.

In the above-described method of calibrating the stereo camera 100 according to an embodiment, a distance Z between the stereo camera 100 and the calibration target T is to be accurately measured to improve the accuracy of calibration of the stereo camera 100. The image-and-distance-measurement unit and the laser rangefinder 20 of the stereo camera 100 according to an embodiment are housed in the outer case 101 as illustrated in FIGs. 1 and 2. The cover glass 102 is on the portions of the outer case 101, which are in the optical paths of light emitted from the laser rangefinder 20 and light reflected and traveling back to the laser rangefinder 20 and the image-and-distance-measurement unit.

The laser rangefinder 20 according to an embodiment is not assumed to be used with an optical-transmission member such as the cover glass 102 disposed between the target object and the laser rangefinder 20. The laser rangefinder 20 with such a cover glass 102 might cause errors in the measured distance L1 measured by laser rangefinder 20 because of a change in speed of light, including emitted light and reflected light, passing through the cover glass 102. In particular, the cover glass 102 according to an embodiment is, for example, a sheet of tempered glass having a thickness of 1 millimeter (mm) or more, and significantly changes the speed of light passing through the cover glass 102, thus causing a significant error in the measured distance $L_1$ measured by the laser rangefinder 20.

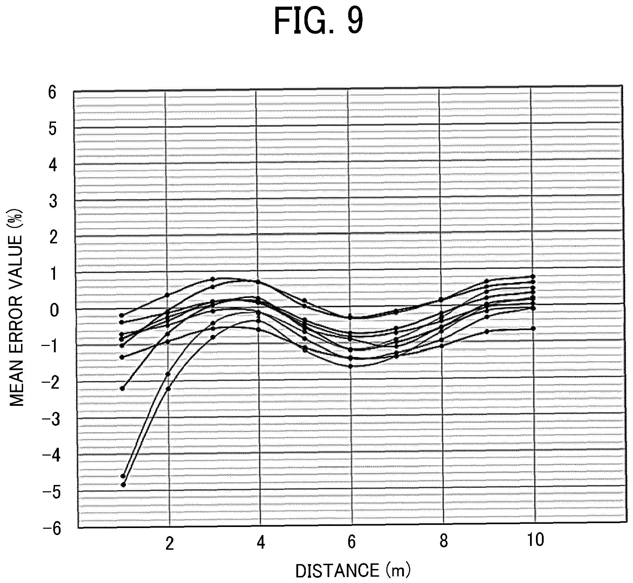

FIG. 9 is a graph of the relation between mean error values (%) and distances (m) to target objects located at a distance of 1 m between adjacent target objects within a range from 1 m to 10 m, which are measured by ten laser rangefinders 20 without any optical-transmission members between the laser rangefinders 20 and the target objects.

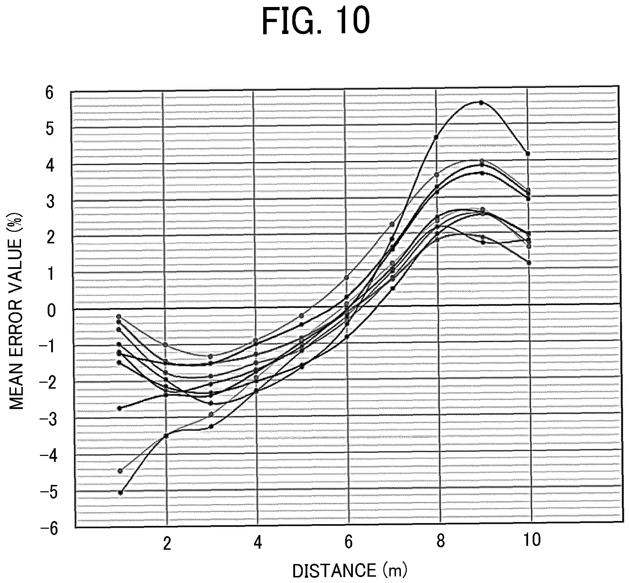

FIG. 10 is a graph of the relation between mean error values (%) and distances (m) to target objects located at a distance of 1 m between adjacent target objects within a range from 1 m to 10 m, which are measured by ten laser rangefinders 20 with optical-transmission members (i.e., a sheet of glass having a thickness of 1 mm) between the laser rangefinders 20 and the target objects.

As is clear from FIGs. 9 and 10, the measurement error is larger for the case with optical-transmission members (i.e., a sheet of glass having a thickness of 1 mm) between the laser rangefinders and the target objects. Further, the distance for the maximum measurement error differs between the cases in FIGs. 9 and 10.

In view of such circumstances, the laser rangefinder 20 is calibrated with the cover glass 102 between the laser rangefinder 20 and a target object before calibration of the stereo camera 100. This can increase the accuracy of measurement of the laser rangefinder 20 with the cover glass 102 between the laser rangefinder 20 and the target object. More specifically, the correction-data calculation unit 63 calculates distance-correction data, which is used to correct errors caused by the cover glass 102 between the laser rangefinder 20 and the target object. The distance-correction data is stored in the storage unit 64. Using the distance-correction data stored in the storage unit 64, the distance correction unit 65 corrects a measured distance obtained from the time measured by time measuring unit 62, outputting the corrected measured distance (i.e., measured distance after calibration) to the calibration calculation unit 53 to perform calibration of the stereo camera 100.

Calibration Example 1

The following describes an example (i.e., calibration example 1 of calibration of the laser rangefinder 20 using distance-correction data calculated.

In the calibration example 1, a cover glass 102 (i.e., an optical-transmission member) is disposed between the laser rangefinder 20 and a calibration target T located at a specified distance, which is preliminarily determined, and the laser rangefinder 20 measures a distance to the calibration target T, thus obtaining an actual measured distance. Using data (i.e., actual-measurement error data) on an error between the specified distance and the actual measured distance, distance-correction data for the laser rangefinder 20 is obtained. The actual-measurement error data means data indicating an error in the distance measured by the laser rangefinder 20 with he optical-transmission member (e.g., the cover glass 102) between the laser rangefinder 20 and the calibration target T.

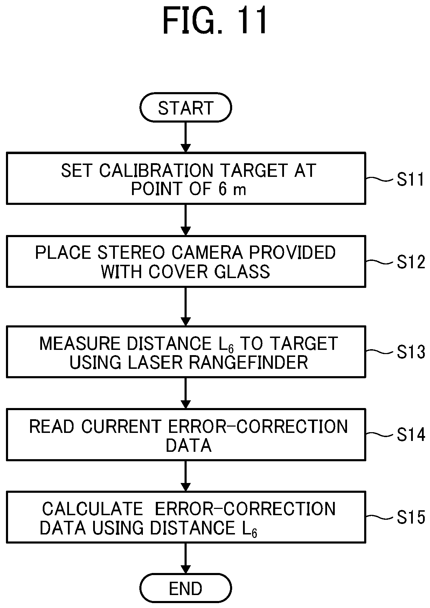

FIG. 11 is a flowchart of a method of calibrating the laser rangefinder 20 according to the calibration example 1.

In step S11 (S11) of the calibration example 1, a calibration target T is set at a specified distance, which is preliminarily determined, and ahead in the direction of travel of the stereo camera 100. In step S12 (S12), the stereo camera 100 is placed at a predetermined position to irradiate the calibration target T with a light beam emitted from the laser rangefinder 20. Then, the laser rangefinder 20 is ready to measure a distance to the calibration target T with the cover glass 102 between the laser rangefinder 20 and the calibration target T.

A method of determining a specified distance is described.

In laser rangefinder 20, the light source 21 periodically emits pulsed light (repeated pulses) with a predetermined pulse width, and the light-receiving element 24 receives light reflected from the calibration target T. Notably, as the laser rangefinder 20 according to the present embodiment emits repeated pulses of light from the light source 21, the error (i.e., measurement error) in measured distance periodically changes with the cycle of a pulse as illustrated in FIGs. 9 and 10.

More specifically, the error in measured distance changes in a cycle of 6 m that is obtained by multiplying 20 nanoseconds (ns) by $3 \times 10^8$ m/s when the speed of light is $3 \times 10^8$ m/s for a pulse with a period of 20 ns, for example. Such a measurement error becomes maximum at a distance of 3 m corresponding to half cycle of a pulse as illustrated in FIG. 10, becomes minimum at a distance of 6 m corresponding to one cycle of the pulse, and becomes maximum again at a distance of 9 m corresponding to 3/2 cycle of the pulse.

In the calibration example 1, distance-correction data used to correct a minimum error is calculated. To obtain such distance-correction data, in the calibration example 1, the specified distance is set to 6 m, and the calibration target T is set at a distance of 6 m in step S11. In step S13 (S13), the laser rangefinder 20 measures a distance to the calibration target T set at a distance of 6 m, thus obtaining a actual-measured distance $L_6$.

In some embodiments, distance-correction data used to correct a maximum error is calculated. In this case, the specified distance is set to 3 m corresponding to half cycle of the pulse or 9 m corresponding to 3/2 cycle of the pulse at which the measurement error becomes maximum. With such a specified distance, the laser rangefinder 20 measures a distance to the calibration target T, thus obtaining a measured distance.

In the calibration example 1, after the actual-measured distance $L_6$ is obtained for the specified distance of 6 m, the correction-data calculation unit 63 reads current error-correction data from the storage unit 64 in step S14 (S14). In step S15 (S15), the correction-data calculation unit 63 corrects the current error-correction data using the actual-measured distance L6 and calculates error-correction data.

The current error-correction data is initial error-correction data (i.e., another distance-correction data) used to correct a measurement error (i.e., measurement-error data for the measured distance) that occurs without an optical-transmission member (the cover glass 102) between the laser rangefinder 20 and the target object, for example. The initial error-correction data is, for example, data used to cancel a mean value of measurement-error data (i.e., error values) for the distances measured by the ten laser rangefinders 20 as illustrated in FIG. 9. Such initial error-correction data is preliminarily stored in the storage unit 64. The distance correction unit 65 usually corrects a measured distance using the initial error-correction data and outputs the corrected measured distance to the calibration calculation unit 53 to correct a measured distance calculated from the time measured by time measuring unit 62.

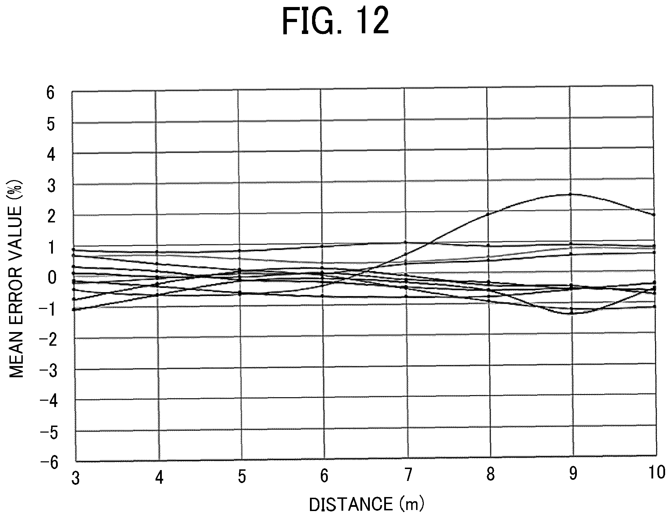

FIG. 12 is a graph of errors in corrected measured distances obtained by correcting the distances measured by the ten laser rangefinders 20 under the same conditions as in FIG. 10, using the initial error-correction data.

When the case in FIG. 10 is compared with the case in FIG. 12, the errors in measured distances corrected with the initial error-correction data (FIG. 12) are smaller than those without correction (FIG. 10). For the case in FIG. 12, however, significant errors are still observed because of the optical-transmission members (i.e., sheets of cover glass 102) between the laser rangefinders 20 and the target objects.

To deal with such observed errors, in the calibration example 1, the initial error-correction data undergoes correction with actual-measured distance $L_6$ obtained with the sheets of cover glass 102 between the laser rangefinders 20 and the target objects, and new error-correction data, that is, corrected initial error-correction data, that is, new error-correction data is obtained. Specifically, the correction-data calculation unit 63 obtains a difference between the specified distance (i.e., 6 m) and the actual-measured distance $L_6$ to the target object at a distance of 6 m measured by the laser rangefinder 20, and corrects the initial error-correction data as a whole by the difference, thus obtaining new error-correction data.

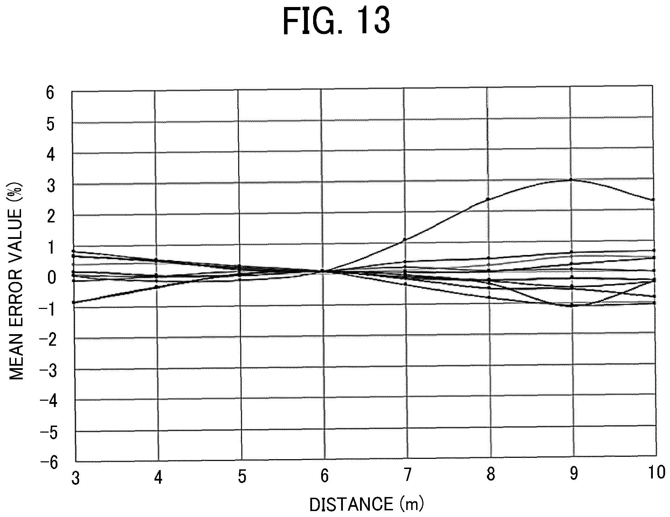

FIG. 13 is a graph of errors in corrected measured distances obtained by correcting distances measured by the ten laser rangefinders 20 under the same conditions as in FIG. 12, using error-correction data obtained according to the calibration example 1.

When the case in FIG. 12 is compared with the case in FIG. 13, the errors in measured distances corrected with the error-correction data obtained according to the calibration example 1 (FIG. 13) are smaller than those corrected with the initial error-correction data (FIG. 12).

Calibration Example 2

The following describes another example (i.e., calibration example 2 of calibration of the laser rangefinder 20 using distance-correction data calculated.

In the calibration example 2, initial error-correction data is not used, and a cover glass 102 (i.e., an optical-transmission member) is disposed between the laser rangefinder 20 and a calibration target T located at predetermined two specified distances from the laser rangefinder 20. With such a cover glass 102, the laser rangefinder 20 measures distances to the calibration target T, thus obtaining actual measured distances to the calibration target T. Using data on errors between the specified distances and the actual measured distances (i.e., actual-measurement error data), distance-correction data (i.e., error-correction data) for the laser rangefinder 20 is obtained.

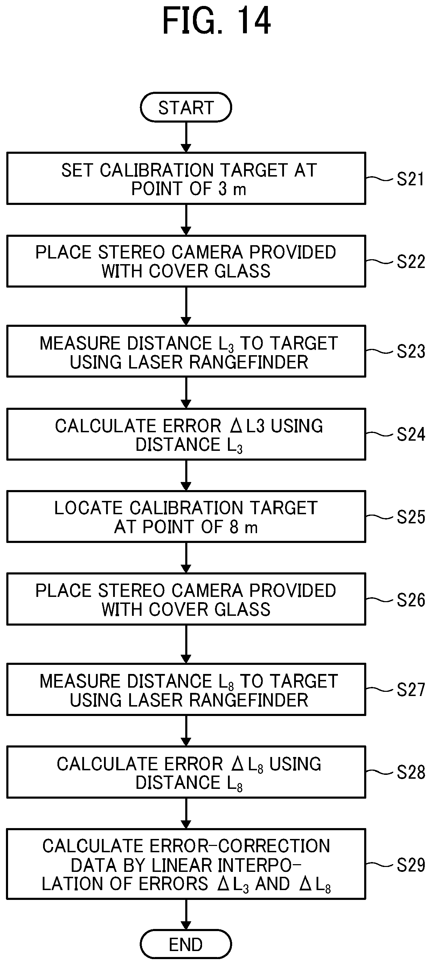

FIG. 14 is a flowchart of a method of calibrating the laser rangefinder 20 according to a calibration example 2.

In step S21 (S21) of the calibration example 2, a calibration target T is set at a first specified distance of 3 m, which is preliminarily determined, and ahead in the direction of travel of the stereo camera 100. In step S22 (S22), the stereo camera 100 is placed at a predetermined position to irradiate the calibration target T with a light beam emitted from the laser rangefinder 20. Subsequently, the laser rangefinder 20 measures a distance to the calibration target T with a cover glass 102 between the laser rangefinder 20 and the calibration target T, and thus obtains an actual-measured distance $L_3$ in step S23 (S23). The laser rangefinder 20 further calculates an error $\Delta L_3$ between the actual-measured distance $L_3$ and the specified distance of 3 m in step S24 (S24).

In step S25 (S25) of the calibration example 2, another calibration target T is set at a second specified distance of 8 m, which is preliminarily determined, and ahead in the direction of travel of the stereo camera 100. In step S26 (S26), the stereo camera 100 is placed at a predetermined position to irradiate the calibration target T with a light beam emitted from the laser rangefinder 20. Subsequently, the laser rangefinder 20 measures a distance to the calibration target T with a cover glass 102 between the laser rangefinder 20 and the calibration target T, and thus obtains an actual-measured distance $L_8$ in step S27 (S27). The laser rangefinder 20 further calculates an error $\Delta L_8$ between the actual-measured distance $L_8$ and the specified distance of 8 m in step S28 (S28).

In the calibration example 2, after the errors $\Delta L_3$ and $\Delta L_8$ are obtained for the two specified distances of 3 m and 8 m, respectively, the errors $\Delta L_3$ and $\Delta L_8$ undergo linear interpolation to obtain an error approximate straight line as error-correction data (i.e., distance-correction data, or linear approximation error data) in step S29 (S29).

In the graph of FIG. 10, the measurement error for the distance measured with the cover glass 102 between the target object and the laser rangefinder 20 reaches a peak at the distance of 3 m and another peak at the distance of 9 m. Between 3 m and 9 m in the graph, the error values (the measurement error) form a waveform close to an approximate line, which can be approximated by an error approximate straight line obtained through linear interpolation. In such a manner, the error-correction data obtained according to the calibration example 2 can reduce the errors between the peaks, which result from the cover glass 102 between the laser rangefinder 20 and the target object.

A method of determining two specified distances is described according to the calibration example 2.

Unlike the calibration example 1, in the calibration example 2, a pulse has a period of 33.3 ns. For the period of 33.3 ns, the error in measured distance changes in a cycle of approximately 10 m that is obtained by multiplying 33.3 ns by $3 \times 10^8$ m/s where the speed of light is $3 \times 10^8$ m/s. In the calibration example 2, the error peak occurs at the distance of 3 m, and the error peak occurs at the distance of 3 m and 8 m. Then, the actual-measured distances L3 and L8 are obtained for the distances of 3 m and 8 m to obtain errors $\Delta L_3$ and $\Delta L_8$ in the calibration example 2. The errors between the error peaks undergo linear interpolation to obtain an error approximate straight line (i.e., linear approximation error data).

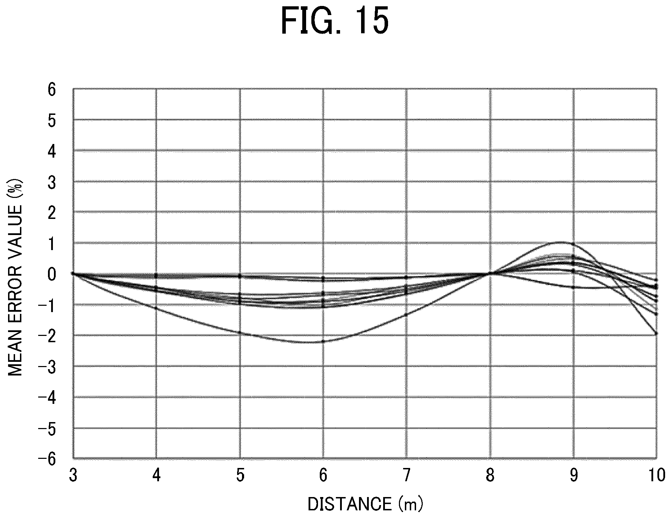

FIG. 15 is a graph of errors in corrected measured distances, obtained by correcting distances measured by ten laser rangefinders 20, using error-correction data obtained according to the calibration example 2.

When the case in FIG. 12 is compared with the case in FIG. 15 although these cannot be directly compared with each other because of their difference in pulse cycle, the errors in measured distances corrected with the error-correction data obtained according to the calibration example 2 (FIG. 15) are smaller than those corrected with the initial error-correction data (FIG. 12).

Calibration Example 3

The following describes another example (i.e., calibration example 3 of calibration of the laser rangefinder 20 using distance-correction data calculated.

Same as in the calibration example 2, in the calibration example 3, a cover glass 102 (i.e., an optical-transmission member) is disposed between the laser rangefinder 20 and two calibration targets T located at different predetermined specified distances and the laser rangefinder 20 measures distances to the calibration targets T, thus obtaining actual measured distances. Using information (data) on errors between the specified distances and the actual measured distances (i.e., data on errors in actual-measured distances), distance-correction data for the laser rangefinder 20 is obtained.

In the calibration example 3, the errors between the peaks undergo curve approximation (interpolation), instead of linear interpolation, to obtain an error approximate curve line (i.e., curve approximation error data). Same as in the calibration example 2, in the calibration example 3, after the errors $\Delta L_3$ and $\Delta L_8$ are obtained for the two specified distances of 3 m and 8 m, respectively, the errors $\Delta L_3$ and $\Delta L_8$ undergo curve approximation to obtain an error approximate curve line as error-correction data (i.e., curve approximation error data).

As illustrated in FIG. 10, the errors in the distances measured with the cover glass 102 between the laser rangefinder 20 and the target object form a waveform close to a sinusoidal waveform (i.e., sine curve). The error-correction data can be obtained by identifying such a sinusoidal waveform close to the waveform of the errors in the measured distances, to reduce the errors caused by the cover glass 102 between the laser rangefinder 20 and the target object.

A method of calculating error-correction data is described according to calibration example 3.

The error-correction data according to the calibration example 3 is given by the formula (7) below:

$$\text{Error-Correction Value} = \text{Level Correction Term} + \text{Amplitude Correction Term} \times \sin$$

$$(\text{Phase Correction Term} + \text{Distance Constant} \times \text{Distance}) \quad ... (7)$$

The level correction term refers to the amount of shift of the entire waveform of the errors in measured distances. In the calibration example 3, the level correction term is a mean value obtained by dividing the sum of the errors $\Delta L_3$

and $\Delta L_8$ in the measured distances of 3 m and 8 m, which are error peaks, into two (i.e., $(\Delta L3 + \Delta L8)/2$).

The amplitude correction term is the amount of reduction in the amplitude of the waveform of the errors in the measured distances. In the calibration example 3, the amplitude correction term is a mean value of an absolute value of the difference between the errors $\Delta L_3$ and $\Delta L_8$ in the measured distances of 3 m and 8 m, which are error peaks, (i.e., $|\Delta L_3 - \Delta L_8|/2$).

The phase correction term $\theta_0$ is a phase correction component obtained from the thickness dg and the refractive index n of the cover glass 102. The phase correction term $\theta_0$ is obtained by adding the amount of shift due to the presence of the cover glass 102 to a correction value peculiar to the system. For the amount of shift due to the presence of the cover glass 102, a distance difference becomes 0.4 mm when the thickness dg of the cover glass 102 is 1 mm, and the refractive index n of the cover glass 102 is 1.4. The distance difference is obtained by an expression: dg $\times$ (n - 1). Using the obtained distance difference, a phase difference of $5.03 \times 10^{-4}$ rad is obtained by "the distance difference (0.4 mm) $\times 2 \times \Delta\theta$". By adding a phase difference peculiar to the system to the obtained phase difference, a value of the phase correction term $\theta_0$ is obtained.

The distance constant $\Delta\theta$ is a constant that converts the distance into a phase difference. The distance constant $\Delta\theta$ is given by the formula (8) below where c denotes a speed of light of $3 \times 10^8$ m/s, and dp denotes a pulse width of a pulse of 33.3 ns:

$$\Delta\theta = 2\pi/(c \times dp) = 0.6283 \text{ (rad/m)} \quad ... (8)$$

In the calibration example 3, the errors $\Delta L_3$ and $\Delta L_8$ in the measured distances of 3 m and 8 m are actually measured to obtain an interval corresponding to approximately 5 m obtained by c $\times$ dp/2.

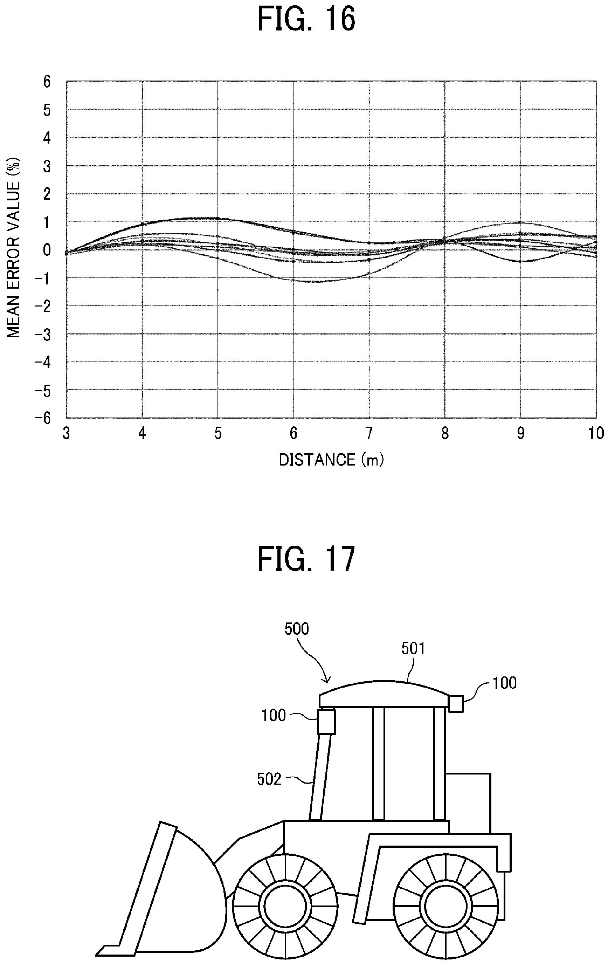

FIG. 16 is a graph of errors in corrected measured distances, obtained by correcting distances measured by ten laser rangefinders 20, using error-correction data obtained according to the calibration example 3.

When the case in FIG. 12 is compared with the case in FIG. 16 although these cannot be directly compared with each other because of their difference in pulse cycle, the errors in measured distances corrected with the error-correction data obtained according to the calibration example 3 (FIG. 16) are smaller than those corrected with the initial error-correction data (FIG. 12).

Next, a construction vehicle as a mobile object mounted with the stereo camera 100 according to an embodiment is described.

FIG. 17 is an illustration of a bulldozer 500 as construction vehicle according to an embodiment.

The bulldozer 500 according to an embodiment includes a stereo camera 100 on the rear face of a leaf 501. The bulldozer 500 according to an embodiment includes another stereo camera 100 on the side face of a pillar 502. Using such stereo cameras 100 enables recognition of a distance to person or an obstacle in the rear of or lateral to the bulldozer 500. This further enables different types of information processing, including a risk determination process to determine risk of crash, for example.

The position at which the stereo camera 100 is mounted is not limited to those positions described above. The stereo camera 100 is mounted, for example, at a position to detect a situation outside a vehicle ahead of the bulldozer 500 in the direction of travel. This enables various mechanical controls of the bulldozer 500, including power control, brake control, wheel control, and display control of a display of the bulldozer 500.

In the present embodiment, measurement errors of the laser rangefinder 20 such as a TOF sensor is calibrated to calibrate the image-and-distance-measurement unit including the stereo camera. However, the application purpose of the laser rangefinder 20 as range-finding device is not limited to such an application. In addition to a device that measure a distance using only the laser rangefinder 20, the laser rangefinder 20 is also applicable, for example, in another distance-detection device other than the stereo camera, including a laser imaging detection and ranging (LiDAR) device, and another range-finding device such as an ultrasonic radar to perform calibration.

Notably, the image-and-distance-measurement unit such as a stereo camera is a distance-detection device that is not self-luminous and detects a distance by receiving light, and such an image-and-distance-measurement unit is vulnerable to disturbance light such as ambient light, possibly causing larger measurement errors. To avoid such a situation, the laser rangefinder 20 according to an embodiment that is self-luminous and less vulnerable to ambient light is used as a range-finding device to calibrate the image-and-distance-measurement unit, thus successfully reducing changes in measured distance errors because of disturbance of ambient light of the image-and-distance-measurement unit.

What has been described above is only an example, and each of the following aspects produces a unique effect.

First Aspect

In the first aspect, a method of calculating distance-correction data performed by a range-finding device includes:

emitting light (e.g., repeated pulsed of light) to a calibration target (e.g., calibration target T) at a specified distance from a range-finding device (e.g., a laser rangefinder 20) and receiving light reflected from the calibration target that has been irradiated with the emitted light, with an optical-transmission member (e.g., a cover glass 102) between the range-finding device and the calibration target, to obtain an actual-measured distance from the range-finding device to the calibration target; and calculating distance-correction data using actual-measurement error data between the specified distance and the actual measured distance, the distance-correction data being used to correct a distance from the range-finding device to a target object measured by emitting light to the target object and receiving light reflected from the target object that has been irradiated with the emitted light, with the optical-transmission member between the range-finding device and the target object.

In recent years, range-finding devices are increasingly used in different situations, and might need to be provided in an outer case according to usage environment to maintain or increase capabilities such as water-proof, dust-proof, and robustness. Such a range-finding device in an outer case is to emit light out of the outer case and receive light reflected from a target object inside the outer case. To achieve such a performance, an optical-transmission member is provided on a portion of the outer case, which is in the optical path of light emitted from the range-finding device and reflected from the target object.

When used with an optical-transmission member between the range-finding device and the target object, a typical range-finding device would cause errors in measured distances, which result from changes in speed of the emitted light and the reflected light passing through the optical-transmission member.

To correct such errors, the range-finding device according to the first aspect obtains distance-correction data by measuring a distance to a calibration target located at a predetermined specified distance from the range-finding device, with an optical-transmission member between the calibration target and the range-finding device. The range-finding device according to the first aspect further obtains actual-measurement error data indicating an error between the specified distance and the distance actually measured with the optical-transmission member between the range-finding device and the calibration target. The actual-measurement error data represents an error caused by a change in the speed of the reflected light or emitted light passing through the optical-transmission member. Even a range-finding device, which is not assumed to be used with an optical-transmission member between the range-finding device and the target object, can measure a distance with less error with an optical-transmission between the range-finding device and the target object by correcting the measured distance using the distance-correction data obtained from the actual-measurement error data.

Second Aspect

In the second aspect, in the method according to the first aspect, the specified distance includes a distance for which an error in the actual-measured distance becomes approximately maximum without correction with the distance-correction data.

This configuration enables calculation of the actual-measurement-error data representing peak errors of the errors in the measured distances, which periodically changes. This further enables calculation of the error-correction data representing the waveform of the errors in the measured distances, which periodically changes.

Third Aspect

In this third aspect, the method according to the first aspect or the second aspect, further includes obtaining at least one of measurement-error data for a distance from the range-finding device to the target object measured without the optical-transmission member between the range-finding device and the target object; and another distance-correction data (i.e., the initial error-correction data) obtained from the measurement-error data. In the calculating, the distance-correction data is calculated using the actual-measurement error data and one of the measurement-error data and said another distance-correction data.

The measurement error data indicating errors in a distance to the target object, which is measured with the optical-transmission member between the range-finding device and the target object, is often known data. The configuration according to the third aspect can calculates distance-correction data using known data. This enables simple calculation of distance-correction data.

Fourth Aspect

In the fourth aspect, in the method according to any one of the first aspect to the third aspect, in the emitting, the specified distance includes at least two different specified distances from the range-finding device. In the calculating, the distance-correction data is calculated using the actual-measurement error data $\Delta L_3$ and $\Delta L_8$ obtained from the at least two specified distances and the actual-measured distances $L_3$ and $L_8$ at the at least two specified distances.

This configuration enables calculation of the error-correction data representing the waveform of the errors in the measured distances, which periodically changes.

Fifth Aspect

In the fifth aspect, in the method according to the fourth aspect, the emitting (S13) includes emitting light, whose intensity periodically changes, to the target object and obtaining a distance from the range-finding device (20) to the target object using a difference in phase between the emitted light and the light reflected from the target object. The at least two specified distances include two distances at an interval of n/2 of a cycle of the emitted light where n is a natural number.

This configuration enables calculation of the error-correction data representing the waveform of the errors in the measured distances, which periodically changes.

Sixth Aspect

In the sixth aspect, a method of calculating distance-correction data performed by a range-finding device includes emitting light (e.g., repeated pulses of light), whose intensity periodically changes, to a calibration target at at least two different distances from the range-finding device and receiving light reflected from the calibration target that has been irradiated with the emitted light, to obtain actual-measured distances $L_3$ and Ls from the range-finding device to the calibration target; calculating distance-correction data using actual-measurement error data $\Delta L_3$ and $\Delta L_8$ between the specified distances and the actual-measured distances $L_3$ and $L_8$ to the calibration target. The distance-correction data is used to correct a distance from the range-finding device to a target object measured by emitting light to the target object, receiving light reflected from the target object that has been irradiated with the emitted light, and performing calculation using a difference in phase between the emitted light and the reflected light. The specified distances include two distances at an interval of n/2 of a cycle of the emitted light where n is a natural number.

This configuration enables calculation of appropriate error-correction data representing the waveform of the errors in the measured distances, which periodically changes, irrespective of the presence or absence of the optical-transmission member between the range-finding device and the target object.

Seventh Aspect

In the seventh aspect, in the method according to any one of the fourth aspect to the sixth aspect, the actual-measurement error data includes a mean value (($\Delta L_3 + \Delta L_8$)/2) of errors $\Delta L_3$ and $\Delta L_8$ between the at least two specified distances and the actual-measured distances $L_3$ and $L_8$.

This configuration enables calculation of the error-correction data that reduces errors over the entire waveform of the errors in the measured distances, which periodically changes.

Eighth Aspect

In the eighth aspect, in the method according to any one of the fourth aspect to the seventh aspect, the actual-measurement error data includes a mean value ($|\Delta L_3 - \Delta L_8|/2$) of absolute values of differences in errors $\Delta L_3$ and $\Delta L_8$ between the at least two specified distances and the actual-measured distances $L_3$ and $L_8$.

This configuration enables calculation of the error-correction data that reduces the peak errors of the waveform of the errors in the measured distances, which periodically changes.

Ninth Aspect

In the ninth aspect, in the method according to any one of the fourth aspect to the eighth aspect, the actual-measurement error data includes linear approximation error data including linearly-approximated errors $\Delta L_3$ and $\Delta L_8$ between the at least two specified distances and the actual-measured distances $L_3$ and $L_8$.

This configuration enables simple calculation of the error-correction data that reduces errors for a waveform close to linear shape among the waveforms of the errors in the measured distances, which periodically changes, has a waveform closer to a linear shape.

Tenth Aspect

In the tenth aspect, in the method according to the fourth aspect to the eighth aspect, the actual-measurement error data includes curve approximation error data including curve-approximated errors $\Delta L_3$ and $\Delta L_8$ between the at

least two specified distances and the actual-measured distances $L_3$ and $L_8$.

This configuration simple calculation of the error-correction data that reduces errors of the waveform of the errors in the measured distances, which periodically changes a waveform closer to a linear shape.

Eleventh Aspect

In the eleventh aspect, in the method according to the tenth aspect, the curve approximation error data includes the errors that have undergone sin curve approximation.

This configuration simple calculation of the error-correction data that reduces errors of a waveform close to sine curve of the errors in the measured distances, which periodically changes a waveform closer to a linear shape.

Twelfth Aspect

In the twelfth aspect, in the method according to the tenth aspect or the eleventh aspect, the curve approximation error data includes a phase that has been corrected according to a change in speed of each of the emitted light and the reflected light, which are passing through the optical-transmission member.

This configuration enables calculation of appropriate error-correction data used to reduce periodically variable errors in the measured distances, irrespective of the occurrence of shift in the waveform phase because of the presence of the optical-transmission member between the range-finding device and the target object.

Thirteenth Aspect

In the thirteenth aspect, a range-finding device (e.g., a device including the laser rangefinder 20 and the cover glass 102 in the stereo camera 100) includes: an optical-transmission member (e.g., a cover glass 102) between a laser rangefinder (e.g., the laser rangefinder 20) and a target object; the laser rangefinder configured to: emit light to the target object and receive light reflected from the target object that has been irradiated with the emitted light to measure a distance to the target object; and emit light to a calibration target at a specified distance from the laser rangefinder and receive light reflected from the calibration target that has been irradiated with the emitted light, with the optical-transmission member between the laser rangefinder and the calibration target, to obtain an actual-measured distance to the calibration target; and correcting means (e.g., a distance correction unit 65) for correcting the measured distance to the target object using distance-correction data obtained from actual-measurement error data that has been obtained from the specified distance and the actual-measured distance.

This configuration enables even a range-finding device, which is not assumed to be used with an optical-transmission member between the range-finding device and the target object, to measure a distance with less error with an optical-transmission between the range-finding device and the target object.

Fourteenth Aspect

In the fourteenth aspect, a range-finding device includes a laser rangefinder configured to: emit light, whose intensity periodically changes, to a target object and receive light reflected from the target object that has been irradiated with the emitted light to measure a distance to the target object using a difference in phase between the emitted light and the light reflected from the target object; and emit light to a calibration target at at least two different specified distances from the laser rangefinder and receive light reflected from the calibration targets that has been irradiated with the emitted light, to obtain actual-measured distances to the calibration target; and correcting means for correcting the measured distance to the target object using distance-correction data obtained from actual-measurement error data that has been obtained from the specified distances and the actual-measured distances. The specified distances include two distances at an interval of n/2 of a cycle of the emitted light where n is a natural number.

This configuration achieves the range-finding device capable of obtaining a measurement distance with less error irrespective of the presence or absence of the optical-transmission member between the range-finding device and the target object.

Fifteenth Aspect

In the fifteenth aspect, a mobile object (e.g., a bulldozer 500) includes the range-finding device according to the thirteenth aspect or the fourteenth aspect.

For the range-finding device mounted on a mobile object, the distance between the mobile object and a target object at an unknown distance changes from moment to moment, and such a range-finding device on the mobile object has difficulties in the calibration of the range-finding device and cannot determine whether the measured distance is correct. Unlike vehicles such as automobiles linearly running on the roads, construction machinery vehicles often repeatedly move on and back and rotate, and have difficulties in calibration. With the configuration according to the fifteenth aspect, the range-finding device mounted even on such a mobile object can correct a measured distance value and obtain a measured distance with less error.

Sixteenth Aspect

In the sixteenth aspect, the mobile object according to the fifteenth aspect includes a cargo handling vehicle, and the range-finding device is placed outside the cargo handling vehicle.
This configuration provides a cargo handling vehicle capable of measuring the distance with less errors.

Seventeenth Aspect

In the seventeenth aspect, a stereo camera includes a laser range-finding device configured to calibrate an image-and-distance-measurement unit. In the stereo camera, a cover glass is shared by the image-and-distance-measurement unit and the laser rangefinder.
This configuration improves accuracy of alignment of plural sheets of cover glass disposed in the optical paths to and from the image-and-distance-measurement unit and the laser rangefinder, respectively, and thus increases the accuracy of distance measurement of the image-and-distance-measurement unit and the laser rangefinder.
The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.
Numerous additional modifications and variations are possible in light of the above teachings. It is therefore to be understood that, within the scope of the above teachings, the present disclosure may be practiced otherwise than as specifically described herein. With some embodiments having thus been described, it will be obvious that the same may be varied in many ways. Such variations are not to be regarded as a departure from the scope of the present disclosure and appended claims, and all such modifications are intended to be included within the scope of the present disclosure and appended claims.

**Claims**

1. A method of calculating distance-correction data performed by a range-finding device (20), the method comprising:

   emitting light to a calibration target at a specified distance from a range-finding device (20) and receiving light reflected from the calibration target that has been irradiated with the emitted light, with an optical-transmission member (102) between the range-finding device (20) and the calibration target, to obtain an actual-measured distance from the range-finding device (20) to the calibration target (S13); and
   calculating distance-correction data (S15) using actual-measurement error data between the specified distance and the actual measured distance, the distance-correction data being used to correct a distance from the range-finding device (20) to a target object measured by emitting light to the target object and receiving light reflected from the target object that has been irradiated with the emitted light, with the optical-transmission member between the range-finding device and the target object.

2. The method according to claim 1,
   wherein the specified distance includes a distance for which an error in the actual-measured distance becomes approximately maximum without correction with the distance-correction data.

3. The method according to claim 1 or 2, further comprising obtaining at least one of measurement-error data for a distance from the range-finding device (20) to the target object measured without the optical-transmission member (102) between the range-finding device (20) and the target object; and another distance-correction data obtained from the measurement-error data,
wherein in the calculating (S15), the distance-correction data is calculated using the actual-measurement error data and one of the measurement-error data and said another distance-correction data.

4. The method according to any one of claims 1 to 3,
   wherein in the emitting (S13), the specified distance includes at least two different specified distances from the range-finding device (20), and
   wherein in the calculating (S15), the distance-correction data is calculated using the actual-measurement error data obtained from the at least two specified distances and the actual-measured distances at the at least two specified distances.

5. The method according to claim 4,
   wherein the emitting (S13) includes emitting light, whose intensity periodically changes, to the target object and obtaining a distance from the range-finding device (20) to the target object using a difference in phase between the emitted light and the light reflected from the target object, and
   wherein the at least two specified distances include two distances at an interval of n/2 of a cycle of the emitted light where n is a natural number.

6. The method according to any one of claims 4 and 5,
   wherein the actual-measurement error data includes a mean value of errors between the at least two specified distances and the actual-measured distances.

7. The method according to any one of claims 4 to 6,
   wherein the actual-measurement error data includes a mean value of absolute values of differences in errors between the at least two specified distances and the actual-measured distances to the calibration target.

8. The method according to any one of claims 4 to 7,
   wherein the actual-measurement error data includes linear approximation error data including linearly-approximated errors between the at least two specified distances and the actual-measured distances.

9. The method according to any one of claims 4 to 7,
   wherein the actual-measurement error data includes curve approximation error data including curve-approximated errors between the at least two specified distances and the actual-measured distances.

10. The method according to claim 9,
    wherein the curve approximation error data includes the errors that have undergone sin curve approximation.

11. The method according to claim 9 or 10,
    wherein the curve approximation error data includes a phase that has been corrected according to a change in speed of each of the emitted light and the reflected light, which are passing through the optical-transmission member (102).

12. A range-finding device (20 and 102) comprising:

    an optical-transmission member (102) between a laser rangefinder (20) and a target object;
    the laser rangefinder (20) configured to:

        emit light to the target object and receive light reflected from the target object that has been irradiated with the emitted light to measure a distance from the laser rangefinder (20) to the target object; and
        emit light to a calibration target at a specified distance from the laser rangefinder (20) and receive light reflected from the calibration target that has been irradiated with the emitted light, with the optical-transmission member (102) between the laser rangefinder (20) and the calibration target, to obtain an actual-measured distance to the calibration target; and

    correcting means (65) for correcting the measured distance to the target object using distance-correction data based on actual-measurement error data between the specified distance and the actual-measured distance.

**13.** A range-finding device (20 and 102) comprising:

a laser rangefinder (20) configured to:

emit light, whose intensity periodically changes, to a target object and receive light reflected from the target object that has been irradiated with the emitted light to measure a distance to the target object using a difference in phase between the emitted light and the light reflected from the target object; and
emit light to a calibration target at at least two different specified distances from the laser rangefinder (20) and receive light reflected from the calibration target that has been irradiated with the emitted light, to obtain actual-measured distances to the calibration target; and

correcting means (65) for correcting the measured distance to the target object using distance-correction data based on actual-measurement error data between the specified distances and the actual-measured distances, wherein the specified distances include two distances at an interval of n/2 of a cycle of the emitted light where n is a natural number.

**14.** A mobile object (500) comprising the range-finding device (20 and 102) according to claim 12 or 13.

**15.** The mobile object (500) according to claim 14,
wherein the mobile object (500) includes a cargo handling vehicle, and
wherein the range-finding device (20 and 102) is mounted outside the cargo handling vehicle.

# FIG. 1

EP 3 882 659 A1

FIG. 2

# FIG. 3

# FIG. 4

# FIG. 5

# FIG. 6

# FIG. 7

EP 3 882 659 A1

# FIG. 8

START

SET CALIBRATION TARGET ~S1

PLACE STEREO CAMERA ~S2

MEASURE DISTANCE $L_1$ TO TARGET USING LASER RANGEFINDER ~S3

CALCULATE DISTANCE Z BETWEEN IMAGE-AND-DISTANCE-MEASUREMENT UNIT AND TARGET ~S4

CAPTURE IMAGE OF TARGET USING IMAGE-AND-DISTANCE-MEASUREMENT UNIT ~S5

CALCULATE DISPARITY $d_0$ OF TARGET ~S6

S7

NO — REPEAT TWICE OR MORE?

YES

CALCULATE VALUES Bf AND $\Delta d$ USING DISPARITY $d_0$ AND DISTANCE Z ~S8

END

# FIG. 9

# FIG. 10

# FIG. 11

START

SET CALIBRATION TARGET AT
POINT OF 6 m — S11

PLACE STEREO CAMERA PROVIDED
WITH COVER GLASS — S12

MEASURE DISTANCE $L_6$ TO TARGET
USING LASER RANGEFINDER — S13

READ CURRENT ERROR-CORRECTION
DATA — S14

CALCULATE ERROR-CORRECTION
DATA USING DISTANCE $L_6$ — S15

END

# FIG. 12

# FIG. 13

# FIG. 14

START

↓

SET CALIBRATION TARGET AT POINT OF 3 m —— S21

↓

PLACE STEREO CAMERA PROVIDED WITH COVER GLASS —— S22

↓

MEASURE DISTANCE $L_3$ TO TARGET USING LASER RANGEFINDER —— S23

↓

CALCULATE ERROR $\triangle L3$ USING DISTANCE $L_3$ —— S24

↓

LOCATE CALIBRATION TARGET AT POINT OF 8 m —— S25

↓

PLACE STEREO CAMERA PROVIDED WITH COVER GLASS —— S26

↓

MEASURE DISTANCE $L_8$ TO TARGET USING LASER RANGEFINDER —— S27

↓

CALCULATE ERROR $\triangle L_8$ USING DISTANCE $L_8$ —— S28

↓

CALCULATE ERROR-CORRECTION DATA BY LINEAR INTERPO-LATION OF ERRORS $\triangle L_3$ AND $\triangle L_8$ —— S29

↓

END

# FIG. 15

# FIG. 16

# FIG. 17

Europäisches
Patentamt

European
Patent Office

Office européen
des brevets

# EUROPEAN SEARCH REPORT

Application Number

EP 21 16 3401

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/194682 A1 (HEWLETT PACKARD DEVELOPMENT CO [US]) 25 October 2018 (2018-10-25) | 1-3,6-8, 11,12,15 | INV. G01S7/497 G01S17/86 |
| Y | * paragraphs [0009] - [0039] * | 4,5,9, 10,13,14 | G01S17/931 G06T7/593 |
| | ----- | | |
| Y | EP 1 645 844 A1 (OLYMPUS CORP [JP]) 12 April 2006 (2006-04-12) * paragraphs [0020] - [0138] * | 14 | |
| | ----- | | |
| Y | WO 2008/005516 A2 (CANESTA INC; BAMJI CYRUS [US]; YALCIN HAKAN [US]) 10 January 2008 (2008-01-10) * paragraphs [0002] - [0021], [0051] - [0108] * | 4,5,9, 10,13 | |
| | ----- | | |

TECHNICAL FIELDS
SEARCHED    (IPC)

G01S
G06T

The present search report has been drawn up for all claims

| Place of search | Date of completion of the search | Examiner |
|---|---|---|
| Munich | 2 July 2021 | Köppl, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 3401

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2021

| Patent document cited in search report | | Publication date | Patent family member(s) | | Publication date |
|---|---|---|---|---|---|
| WO 2018194682 | A1 | 25-10-2018 | CN | 110536851 A | 03-12-2019 |
| | | | EP | 3612480 A1 | 26-02-2020 |
| | | | JP | 2020517938 A | 18-06-2020 |
| | | | US | 2020182987 A1 | 11-06-2020 |
| | | | WO | 2018194682 A1 | 25-10-2018 |
| EP 1645844 | A1 | 12-04-2006 | CN | 1813168 A | 02-08-2006 |
| | | | EP | 1645844 A1 | 12-04-2006 |
| | | | JP | 4402400 B2 | 20-01-2010 |
| | | | JP | 2005077130 A | 24-03-2005 |
| | | | US | 2006072914 A1 | 06-04-2006 |
| | | | WO | 2005022083 A1 | 10-03-2005 |
| WO 2008005516 | A2 | 10-01-2008 | EP | 2038815 A2 | 25-03-2009 |
| | | | US | 7936449 B1 | 03-05-2011 |
| | | | US | 2008007709 A1 | 10-01-2008 |
| | | | US | 2009115995 A1 | 07-05-2009 |
| | | | WO | 2008005516 A2 | 10-01-2008 |

EPO FORM P0459

For more details about this annex : see Official Journal of the European Patent Office, No. 12/82

**EP 3 882 659 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6427984 B